# EUROPÄISCHE PATENTSCHRIFT

(11) **EP 2 874 256 B1**
(45) Veröffentlichungstag und Bekanntmachung des Hinweises auf die Patenterteilung: **29.04.2020**
(21) Anmeldenummer: 14161678.9
(22) Anmeldetag: 26.03.2014
(51) Int. Cl.: H02G 15/013, H02G 15/113, H02G 3/06, G02B 6/44, F16L 21/02, H02G 9/06

(54) **Muffe mit Informationselement**
Sleeve with information element
Manchon avec élément d'information

(30) Priorität: 18.09.2013 DE 202013104262 U
(43) Veröffentlichungstag der Anmeldung: 20.05.2015
(73) Patentinhaber: REHAU AG + Co, 95111 Rehau (DE)
(72) Erfinder: Erdorf, Stefan, 90768 Fürth (DE)

(56) Entgegenhaltungen:
- EP-A1- 1 296 089
- EP-A2- 1 767 842
- DE-B3-102004 056 859
- DE-U1- 9 110 998

## Beschreibung

Die vorliegende Erfindung betrifft eine Muffe mit einem Informationselement. Daneben betrifft die vorliegende Erfindung auch eine Kabelanordnung und eine Kabelrohranordnung mit einer solchen Muffe.

Muffen werden in der Mikrokabelrohrtechnik eingesetzt, um solche Mikrokabelrohre miteinander zu verbinden. An solche Muffen werden hohe Anforderungen gestellt, was die Gas- und / oder Wasserdichtigkeit und die Zugfestigkeit betrifft. Sie werden insbesondere auch dazu benötigt, Hausanschlüsse herzustellen, um damit beispielsweise ein Kabel in ein Haus zu legen.

Bei solchen Muffen wird unterschieden zwischen solchen, deren Dichtung zwischen den Rohren sich auf den Kabeldurchmesser verjüngt und einen entsprechend kleinen Querschnitt aufweist, so dass zwischen den Rohren kein Gasübertritt möglich ist. Das Kabel kann ohne Öffnen dieser Muffe nicht mehr entfernt werden.

In einer zweiten Ausführungsart ist die Dichtung zwischen den Rohren nicht verjüngt und weist einen entsprechend großen Querschnitt auf, sondern entspricht dem Innendurchmesser der Rohre. Bei dieser Variante ist ein Gasübertritt zwischen den Rohren möglich und das Kabel kann ausgezogen bzw. ausgeblasen werden. Eine Muffe der oben genannten Art ist aus dem Dokument DE102004056859B3 bekannt. Das Dokument EP1767842A2 offenbart eine Rohrkupplung mit einer Dichtung, welche in einem mehrteiligen Gehäuse durch Vorsprünge an der Dichtung gehalten wird. Das Dokument EP1296089A1 offenbart eine Kupplung für Strömungsmittel-Leitungen mit von außen fühlbaren Indikatorelementen, um den Nutzer über die korrekte Verbindung der Strömungsmittel-Leitung zu informieren.

Der Muffe selbst ist nicht anzusehen, welche Art von Dichtung eingebaut ist.

Es besteht daher die Notwendigkeit, die Ausführungsvariante im Einbauzustand schnell und sicher erkennen zu können.

Hier setzt die Erfindung ein, die sich die Aufgabe gestellt hat, eine Muffe zur Verfügung zu stellen, die mit technisch einfachen Mitteln die Information bereitstellt, welche Art von Dichtung in ihr verbaut ist.

Erfindungsgemäß wird dies durch die im Anspruch 1 angegebenen Merkmale gelöst.

Weitere vorteilhafte Ausgestaltungen der Erfindung sind in den Unteransprüchen angegeben.

Es wurde erkannt, dass eine Muffe mit einem Dichtelement zum Umschließen eines Kabels oder Kabelrohres und einem das Dichtelement zumindest teilweise umgebenden mehrteiligen Gehäuse mit einem Innenquerschnitt quer zum Kabel oder Kabelrohr, welcher kleiner ist als der Querschnitt des Dichtelements quer zum Kabel oder Kabelrohr, wobei das Gehäuse von einem Verbindungselement zusammengehalten ist, dann ganz besonders geeignet ist, wenn wenigstens ein Teil des Gehäuses einen Durchbruch aufweist und an dem Dichtelement ein Informationselement angeordnet ist.

Durch das Vorsehen eines Informationselements an dem Dichtelement in Kombination mit einem Durchbruch in wenigstens einem Teil des Gehäuses kann eine Information wiedergegeben werden, welche Art von Dichtelement in der Muffe verbaut ist.

Hierdurch lässt sich unterscheiden, ob ein Dichtelement mit einem verjüngten Querschnitt oder ein Dichtelement ohne einen solchen verjüngten Querschnitt vorliegt.

Es hat sich im Rahmen der Erfindung als sehr hilfreich erwiesen, wenn das Dichtelement als Einlegedichtung in Form eines Rohres aus flexiblem Material ausgebildet ist.

Bevorzugt ist das Dichtelement derart geformt, dass es aufbiegbar ist, um im aufgebogenen Zustand das Kabel und / oder das oder die Kabelrohre aufzunehmen. Hierzu kann das Dichtelement beispielsweise längs seiner Achse einen Einschnitt aufweisen, entlang dessen das Aufklappen bewerkstelligbar ist. Das flexible Material des Dichtelements bewirkt ein "Zuklappen", sobald die angelegte Kraft zum Aufbiegen nicht mehr anliegt.

Das Dichtelement ist bevorzugt symmetrisch geformt, ganz besonders ist das Dichtelement etwa in Form eines Hohlzylinders ausgebildet. Das Dichtelement weist zwei Enden auf, die bezogen auf eine Spiegelebene durch die Mitte des Dichtelements und senkrecht zur Achse des Hohlzylinders symmetrisch zueinander angeordnet sind.

In ein solches Rohr aus flexiblem Material lassen sich endseitig die beiden Enden des Kabelrohres auch in einfacher Weise einschieben, wobei das flexible Material dann nach Anordnen des Gehäuses und Verschließen des Gehäuses komprimiert wird und die zu verbindenden Rohre sicher abdichtet.

Als sehr vorteilhaft hat sich im Rahmen der vorliegenden Erfindung herausgestellt, wenn der Durchbruch in wenigstens einem Teil des Gehäuses und das Informationselement an dem Dichtelement hintereinanderliegend angeordnet sind, so dass das Informationselement von der Außenseite des Gehäuses aus identifizierbar ist.

Das hintereinanderliegende Anordnen des Informationselements an dem Dichtelement und des Durchbruchs am Gehäuse gestattet es, von der Außenseite des Gehäuses aus eine Information zu erhalten, welche Art von Dichtelement in der Muffe eingebaut ist. Die Information ist auf diese Weise sehr einfach zugänglich.

Durch das Vorsehen der Vorsprünge ist es in einfacher Weise möglich, eine Information abzugeben, von welcher Art das in der Muffe verbaute Dichtelement ist.

Ein Vorsprung als Informationselement weist eine besonders gute Erkennbarkeit auf.

In der vorliegenden Erfindung ist vorgesehen, dass an dem Dichtelement Vorsprünge ausgebildet sind, die durch den Durchbruch in wenigstens einem Teil des Gehäuses hindurchdringen. Ein Vorsprung ist dann an der der Außenseite des Gehäuses als über der Oberfläche erhabener Abschnitt zu erkennen bzw. zu ertasten.

Ein Informationselement in Form eines Vorsprungs an dem Dichtelement, der durch den Durchbruch in wenigstens einem Teil des Gehäuses hindurchdringt, gestattet es in einfacher Weise, sowohl durch eine Sichtkontrolle, wie auch durch eine Tastkontrolle eine Information darüber zu erhalten, von welcher Art das in der Muffe verbaute Dichtelement ist.

Gerade unter beengten Platzverhältnissen bzw. mangelnder Beleuchtung in Schächten, Kellern oder Baustellen ist dies von einem großen Vorteil, durch eine Sicht- bzw. Tastkontrolle Informationen zu erhalten, von welcher Art das verbaute Dichtelement ist.

Gerade die dadurch ermöglichte Ertastbarkeit in der Dunkelheit bzw. bei mangelhaften Licht- und / oder Platzverhältnissen oder bei Verschmutzungen ist für das Personal, was an der Muffe Arbeiten auszuführen hat, von sehr großem Vorteil.

Darüber hinaus ist mit dem Informationselement in Form eines Vorsprungs an dem Dichtelement ein weiterer Vorteil verbunden.

Durch den Vorsprung wird eine Lagesicherung des Dichtelements im Gehäuse bewirkt, so dass dieses sich nicht unerwünscht verlagern kann. Das Dichtelement nimmt dadurch im Gehäuse eine definierte Position ein, die durch den Vorsprung fixiert ist.

In einer besonders bevorzugten Ausführungsart der vorliegenden Erfindung ist der Vorsprung mit dem Dichtelement einstückig ausgebildet.

Ein solches einstückiges Ausbilden des Vorsprungs mit dem Dichtelement ist bei der Herstellung des Dichtelements beispielsweise in einem Pressprozess oder einem Spritzgussprozess sehr einfach möglich. Hierdurch können Kosten reduziert werden, die Reproduzierbarkeit einer solchen Herstelltechnik ist außerdem sehr hoch. Weiterhin ist dadurch der Vorsprung unverlierbar an dem Dichtelement angeordnet.

Bei der vorliegenden Erfindung sind die Vorsprünge etwa mittig an dem Dichtelement radial abstehenden ausgebildet. Durch einen Vorsprung, der etwa mittig an dem Dichtelement radial abstehend ausgebildet ist, kann ein solches Dichtelement ohne eine zu beachtende Orientierung in das Gehäuse eingesetzt werden. Weiterhin bewirkt der etwa mittig an dem Dichtelement radial abstehende Vorsprung eine sichere Lage im Gehäuse, ohne dass sich das Dichtelement verschieben lässt.

In einer ganz besonders günstigen Ausbildung der vorliegenden Erfindung ist vorgesehen, dass der Vorsprung an dem Dichtelement zylinderförmig oder quaderförmig oder kegelförmig oder stabförmig oder spitz zulaufend oder als Ellipsoid oder in einer Mischform der vorgenannten Formen ausgebildet ist.

Ein Vorsprung an dem Dichtelement in einer der vorgenannten Formen eignet sich ganz besonders gut, sowohl die Information über die Art des Dichtelements durch Sicht- bzw. Tastkontrolle zur Verfügung zu stellen, wie auch im Gehäuse sicher orientiert und definiert angeordnet zu sein.

In der Ausbildung der vorliegenden Erfindung ist vorgesehen, dass zwei einander etwa gegenüberliegende Vorsprünge an dem Dichtelement und zwei zu diesen korrespondierende Durchbrüche am Gehäuse ausgebildet sind.

Durch diese Maßnahme ist sichergestellt, dass an der Muffe an zwei etwa gegenüberliegenden Orten die Information über das eingebaute Dichtelement dargestellt wird. Hierdurch wird es besonders einfach, die Information über die Art des verbauten Dichtelements zu gewinnen, da dies ohne großen Aufwand bei einer fast beliebigen Orientierung der Muffe erfolgen kann.

In einer bevorzugten Ausführungsart der vorliegenden Erfindung ist vorgesehen, dass das Dichtelement, welches einen verjüngten Querschnitt aufweist, mit einem Informationselement versehen ist, das eindeutig unterscheidbar ist von einem Dichtelement, das keine Querschnittsverjüngung aufweist und ein anderes Informationselement aufweist.

Ganz besonders bevorzugt ist in diesem Zusammenhang eine Ausführungsart, bei der das Dichtelement, welches einen verjüngten Querschnitt aufweist, mit einem Vorsprung versehen ist.

Damit ist eine eindeutige Zuordnung - sowohl durch Sicht-, wie auch durch Tastkontrolle - möglich, um die Art des Dichtelements eindeutig festzustellen.

Natürlich kann auch vorgesehen sein, dass das Dichtelement, welches keinen verjüngten Querschnitt aufweist, mit einem Vorsprung versehen ist.

Letztlich ist das mit den Arbeiten an der Muffe betraute Personal über die Art des Dichtelements und das dieses kennzeichnende Informationselement zu informieren.

Das Gehäuse selbst ist aus Gehäuseteilen zusammengesetzt. Dazu können drei oder mehr Gehäuseteile vorgesehen sein, die im zusammengesetzten Zustand das Dichtelement aufnehmen. Bevorzugt ist ein Gehäuse aus drei Gehäuseteilen.

Die Aufgabe der Erfindung, eine Kabelanordnung und eine Kabelrohranordnung mit einer Muffe anzugeben, erfährt ihre Lösung in Anspruch 5. Es wurde im Rahmen der Erfindung erkannt, dass eine Kabelanordnung oder eine Kabelrohranordnung mit wenigstens einer Muffe der vorgenannten Art in ganz besonderer Weise vorteilhaft einsetzbar ist, um Kabel oder Kabelrohre miteinander zu verbinden und damit eine Kabelanordnung oder eine Kabelrohranordnung zur Verfügung zu stellen.

Weitere wichtige Merkmale und Vorteile der Erfindung ergeben sich aus den Unteransprüchen, aus den Fig. und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Fig. dargestellt und werden in der nachfolgenden Beschreibung näher erläutert, wobei sich gleiche Bezugszeichen auf gleiche oder funktional gleiche oder ähnliche Bauteile beziehen.

Hierzu zeigen:
- Fig. 1: eine Aufsicht auf eine erfindungsgemäße Muffe;
- Fig. 2: eine Querschnittsansicht einer erfindungsgemäßen Muffe;
- Fig. 3: eine perspektivische seitliche Ansicht einer Muffe gemäß vorliegender Erfindung;
- Fig. 4: eine Querschnittsansicht eines Details einer Muffe aus Fig. 2 und
- Fig. 5: eine Aufsicht auf das Dichtelement einer erfindungsgemäßen Muffe.

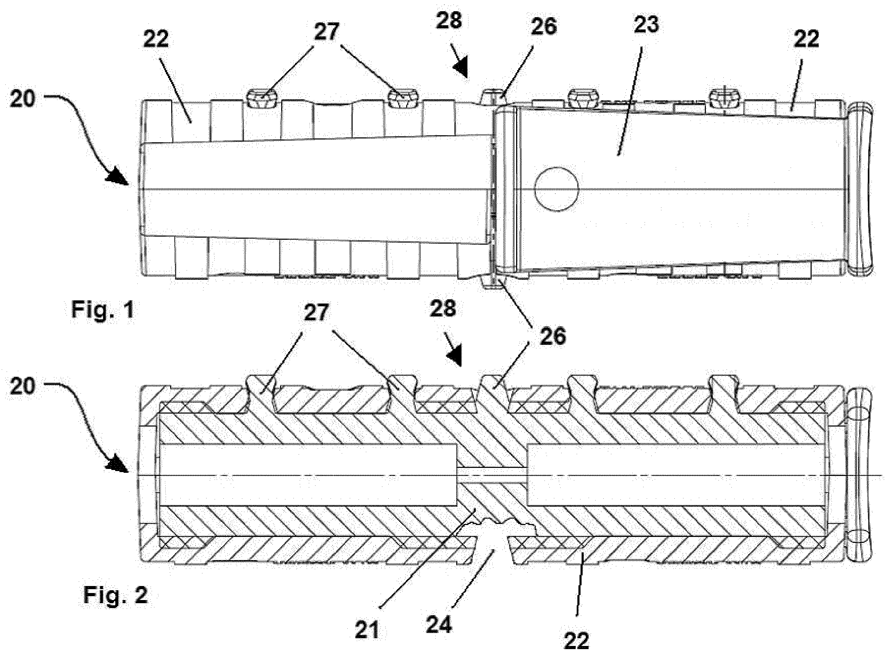

In Fig. 1 ist die Aufsicht auf eine erfindungsgemäße Muffe 20 gezeigt.

Die Muffe 20 umfasst ein Gehäuse 28 aus drei Gehäuseteilen 22, das mithilfe eines Verbindungselements 23 verbunden ist. Das Verbindungselement 23 wirkt mit den Gehäuseteilen 22 des Gehäuses 28 durch eine hier nicht gezeigte keilförmige Verbindungsanordnung zusammen.

Im Inneren der Muffe 20 ist ein Dichtelement 21 angeordnet. Vom Dichtelement 21 stehen etwa mittig angeordnet zwei Vorsprünge 26 radial etwa einander gegenüberliegend hervor. Die Vorsprünge 26 dringen durch Durchbrüche 24 im Gehäuse 28 nach außen.

Am Dichtelement 21 sind weiterhin vier Halteelemente 27 angeformt, die in entsprechende Durchbrüche am Gehäuse 28 hindurchdringen. An den beiden Stirnseiten der Muffe 20 sind - ohne das es hier gezeigt ist - Kabel oder Kabelrohre in die Muffe 20 einzuführen.

In Fig. 2 ist eine Querschnittsansicht der erfindungsgemäßen Muffe 20 gezeigt.

In einem Gehäuse 28 aus drei Gehäuseteilen 22 ist dazu ein Dichtelement 21 aufgenommen. Das Dichtelement 21 weist einander etwa gegenüberliegend und etwa mittig angeordnet zwei radial hervorstehende Vorsprünge 26 auf. In Fig. 2 ist dazu nur ein Vorsprung 26 gezeigt, der zweite Vorsprung 26 ist der Übersichtlichkeit halber weggelassen worden. An dieser Stelle ist der Durchbruch 24 zwischen zwei Gehäuseteilen 22 des Gehäuses 28 gezeigt, durch den der Vorsprung 26 hindurchdringt. Der Vorsprung 26 weist etwa die Form eines Kegelstumpfs auf. Der Durchbruch 24 zwischen zwei Gehäuseteilen 22 des Gehäuses 28 ist etwa kreisförmig ausgebildet.

Am Dichtelement 21 sind weiterhin vier Halteelemente 27 angeordnet. Die Halteelemente 27 weisen eine etwa doppelkegelstumpfartige Form auf, so dass diese Halteelemente 27 etwa auf halber Höhe einen Einschnitt aufweisen.

Die Halteelemente 27 sind einstückig am Dichtelement 21 angeformt.
Die Halteelemente 27 dringen in korrespondierende Durchbrüche am Gehäuse 28 ein und werden von den Rändern der Durchbrüche an den Einschnitten klemmend fixiert. Auf diese Weise gewährleisten die Halteelemente 27 die definierte und sichere Lage des Dichtelements 21 im Gehäuse 28.

Das gezeigte Dichtelement 21 in Fig. 2 weist etwa mittig eine Querschnittsverjüngung auf. Durch den beiderseits der Querschnittsverjüngung angeordneten größeren Innendurchmesser des Dichtelements 21 lassen sich dann beispielsweise hier nicht gezeigte Kabelrohrenden einführen, um diese zu verbinden. Durch den verjüngten Durchmesser etwa in der Mitte des Dichtelements 21 kann das in den Kabelrohren aufgenommene Kabel hindurchgeführt werden. Die Durchführung erfolgt dann in einer gasdichten Ausführung, so dass kein Gasübertritt von einem Kabelrohr zum anderen Kabelrohr erfolgen kann.

Durch die Vorsprünge 26 am Dichtelement 21 ist das Dichtelement ebenfalls definiert und sicher innerhalb des Gehäuses 28 der Muffe 20 positioniert.

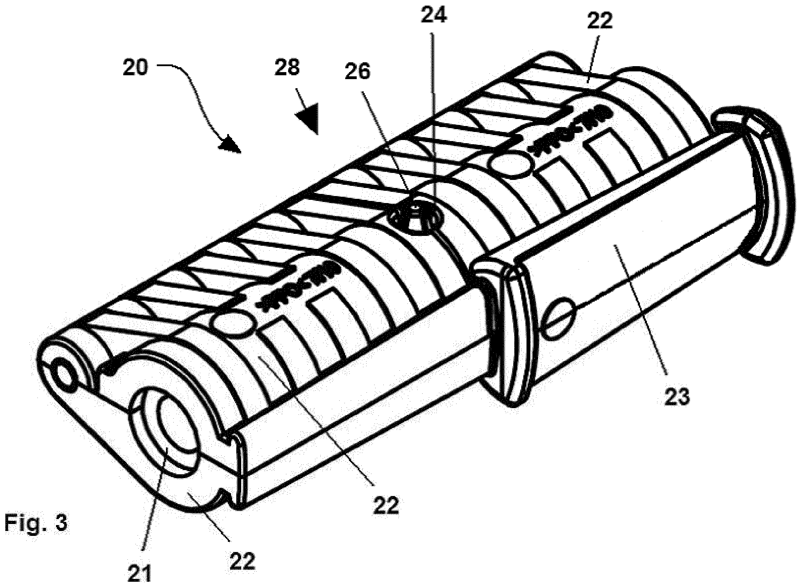

In Fig. 3 ist eine perspektivische seitliche Ansicht der erfindungsgemäßen Muffe 20 gezeigt.

Die Muffe 20 umfasst hierzu ein Gehäuse 28 aus drei Gehäuseteilen 22, bei dem die drei Gehäuseteile 22 des Gehäuses 28 gelenkig miteinander verbunden sind. Im Inneren des Gehäuses 28 ist das Dichtelement 21 aufgenommen. Die drei Gehäuseteile 22 des Gehäuses 28 lassen sich mit Verbindungselementen 23 - von denen nur eines gezeigt ist - durch eine keilförmige Verbindungstechnik miteinander verbinden.

An der Oberseite des Gehäuses 28 ist etwa mittig ein etwa kreisförmiger Durchbruch 24 angeordnet, wobei an dieser Stelle zwei Gehäuseteile 22 des Gehäuses 28 aneinanderstoßen. Durch den Durchbruch 24 an der Oberseite des Gehäuses 28 der Muffe 20 ragt ein etwa kegelstumpfförmig geformter Vorsprung 26 des Dichtelements 21 hindurch und steht ein Stück weit über der Außenoberfläche der Oberseite des Gehäuses 28 hervor. Der Vorsprung 26 des Dichtelements 21 kann sowohl durch Sichtkontakt, wie auch durch Tastkontakt erfasst werden und stellt so eine Information über das im Gehäuse 28 angeordnete Dichtelement 21 und insbesondere dessen Querschnittsausführung zur Verfügung.

In einer anderen hier nicht gezeigten Ausführungsform kann das Gehäuse 28 auch zweiteilig oder mehrteilig ausgebildet sein. Die einzelnen Gehäuseteile 22 des Gehäuses 28 können dabei - ohne dass diese gelenkig miteinander verbunden sind - auch andersartig verbunden sein. Verbindungselemente zum Verbinden dieser einzelnen Gehäuseteile 22 des Gehäuses 28 können vielfältiger Natur sein, wobei keilförmige Verbindungstechniken auf Grund ihrer Einfachheit und insbesondere einfachen Bedienbarkeit zu bevorzugen sind.

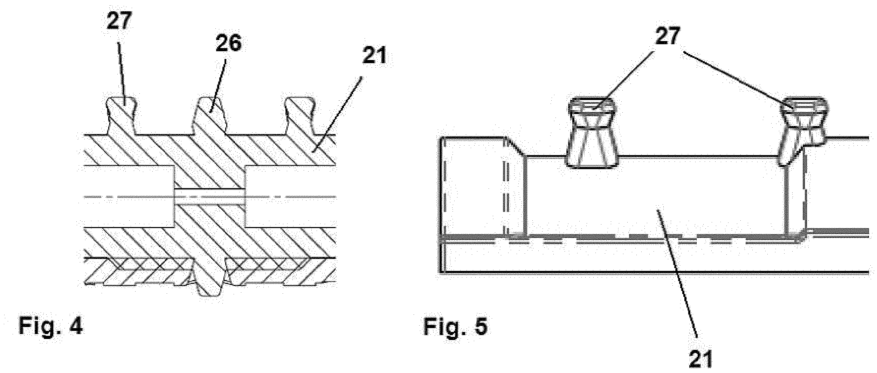

In Fig. 4 ist ein Detail der Muffe 20 aus Fig. 2 in einer Querschnittsansicht gezeigt.

Am Dichtelement 21 sind sowohl Vorsprünge 26 wie auch Halteelemente 27 einstückig angeformt. Die Vorsprünge 26 sind etwa mittig am Dichtelement 21 ausgebildet, dabei etwa diametral gegenüberliegend und radial abstehend ausgeformt.

Die Vorsprünge 26 sind dabei etwa als Kegelstümpfe ausgebildet. Weiterhin sind am Dichtelement 21 einstückig mehrere Halteelemente 27 ausgebildet. Die Halteelemente 27 sind in einer bevorzugten Ausführungsform der Erfindung nur an einer Seite des Dichtelements 21 angeordnet.

Bevorzugt sind hierzu vier Halteelemente 27 am Dichtelement 21 vorgesehen. Die Halteelemente 27 sind doppelkegelstumpfförmig geformt und weisen etwa in halber Höhe einen Einschnitt auf.

Besonders vorteilhaft liegen alle Vorsprünge 26 und Halteelemente 27 in einer Ebene. Auf diese Weise kann das Dichtelement 21 in einem besonders einfachen Werkzeug hergestellt werden. Ebenso ist das Werkzeug zur Herstellung der Gehäuseteile 22 des Gehäuses 28 einfach, da dann die Schieber, die die Durchbrüche erzeugen in einer Ebene angeordnet sind.
Dadurch resultieren erhebliche Kostenvorteile.

In Fig. 5 ist eine Aufsicht auf ein Detail des Dichtelements 21 gezeigt.

Die Halteelemente 27 sind dabei detailliert dargestellt. Deutlich geht dabei die etwa doppelkegelstumpfförmige Form der Halteelemente 27 hervor, die etwa in halber Höhe einen Einschnitt aufweisen, der geeignet ist, von den Rändern der Durchbrüche in einem Gehäuseteil 22 des Gehäuses 28 klemmend fixiert zu werden.

### Bezugszeichenliste

- 20: Muffe
- 21: Dichtelement
- 22: Gehäuseteil
- 23: Verbindungselement
- 24: Durchbruch
- 25: Informationselement
- 26: Vorsprung
- 27: Halteelement
- 28: Gehäuse

## Patentansprüche

1. Muffe (20) mit einem Dichtelement (21) zum Umschließen eines Kabels oder Kabelrohres und einem das Dichtelement (21) zumindest teilweise umgebenden mehrteiligen Gehäuse (28) mit einem Innenquerschnitt quer zum Kabel oder Kabelrohr, welcher kleiner ist als der Querschnitt des Dichtelements (21) quer zum Kabel oder Kabelrohr, und wenigstens einem Verbindungselement (23), wobei das Gehäuse (28) von dem Verbindungselement (23) zusammengehalten ist, wobei wenigstens ein Teil des Gehäuses (28) Durchbrüche (24) aufweist, und am Dichtelement (21) Halteelemente (27) ausgebildet sind, die in korrespondierende Durchbrüche am Gehäuse (28) eindringen, und wobei am Dichtelement (21) wenigstens ein Informationselement (26) angeordnet ist, das als Vorsprung (26) ausgebildet ist, das durch einen Durchbruch (24) des Gehäuses (28) hindurch ragt, wobei das Gehäuse (28) drei Gehäuseteile (22) und zwei Verbindungselemente (23) umfasst, wobei die drei Gehäuseteile (22) durch die zwei Verbindungselemente (23) verbunden sind, und wobei zwei am Dichtelement (21) zueinander etwa gegenüberliegende und etwa mittig angeordnete radial hervorstehende Vorsprünge (26) und zwei zu diesen korrespondierende Durchbrüche (24) am Gehäuse (28) ausgebildet sind, **dadurch gekennzeichnet, dass** die Vorsprünge (26) durch die zu ihnen korrespondierenden Durchbrüche (24) nach außen hindurchdringen, wobei ein Vorsprung (26) durch einen dieser Durchbrüche (24) zwischen zwei Gehäuseteilen (22) des Gehäuses (28) nach außen hindurchdringt, wobei die Vorsprünge (26) so eine Information über das im Gehäuse (28) angeordnete Dichtelement (21) und insbesondere dessen Querschnittsausführung zur Verfügung stellen.

2. Muffe (20) nach Anspruch 1, **dadurch gekennzeichnet, dass** das Dichtelement (21) als Einlegedichtung in Form eines Rohrs aus flexiblem Material ausgebildet ist.

3. Muffe (20) nach einem der Ansprüche 1 oder 2, **dadurch gekennzeichnet, dass** Vorsprünge (26) mit dem Dichtelement (21) einstückig ausgebildet sind.

4. Muffe (20) nach einem der vorangehenden Ansprüche, **dadurch gekennzeichnet, dass** die Vorsprünge (26) an dem Dichtelement (21) zylinderförmig oder quaderförmig oder kegelförmig oder stabförmig oder spitz zulaufend oder als Ellipsoid oder in einer Mischform der vorgenannten Formen ausgebildet sind.

5. Kabelanordnung oder Kabelrohranordnung mit wenigstens einer Muffe (20) nach einem der Ansprüche 1 bis 4.

## Claims

1. Sleeve (20) with a sealing element (21) for enclosing a cable or cable conduit and a multipart housing (28), which at least partially surrounds the sealing element (21) and has an internal cross section transverse to the cable or cable conduit, which is smaller than the cross section of the sealing element (21) transverse to the cable or cable conduit, and at least one connecting element (23), wherein the housing (28) is held together by the connecting element (23), wherein at least part of the housing (28) has openings (24), and on the sealing element (21) there are formed retaining elements (27), which enter into corresponding openings on the housing (28), and wherein on the sealing element (21) there is arranged at least one information element (26), which is formed as a projection (26), which protrudes through an opening (24) of the housing (28), wherein the housing (28) comprises three housing parts (22) and two connecting elements (23), wherein the three housing parts (22) are connected by the two connecting elements (23), and wherein two radially protruding projections (26) lying approximately opposite one another on the sealing element (21) and arranged approximately centrally are formed and two openings (24) corresponding to these are formed on the housing (28), **characterised in that** the projections (26) pass outwards through the openings (24) corresponding to them, wherein a projection (26) through one of these openings (24) passes outwards between two housing parts (22) of the housing (28), wherein the projections (26) make available in this way information about the sealing element (21) arranged in the housing (28) and in particular its cross-sectional design.

2. Sleeve (20) according to claim 1, **characterised in that** the sealing element (21) is designed as an insert seal in the form of a tube of flexible material.

3. Sleeve (20) according to one of claims 1 or 2, **characterised in that** projections (26) are formed in one piece with the sealing element (21).

4. Sleeve (20) according to one of the preceding claims, **characterised in that** the projections (26) are formed on the sealing element (21) cylindrically or cube-shaped or cone-shaped or rod-shaped or tapered or as an ellipsoid or in a mixed form of the aforesaid shapes.

5. Cable arrangement or cable conduit arrangement with at least one sleeve (20) according to one of claims 1 to 4.

## Revendications

1. Manchon (20) avec un élément d'étanchéité (21) servant à renfermer un câble ou une gaine de câbles et un boîtier (28) en plusieurs parties, entourant au moins en partie l'élément d'étanchéité (21), avec une section transversale intérieure de manière transversale par rapport au câble ou à la gaine de câbles, laquelle est plus petite que la section transversale de l'élément d'étanchéité (21) de manière transversale par rapport au câble ou à la gaine de câbles, et au moins un élément de liaison (23), dans lequel le boîtier (28) est maintenu par l'élément de liaison (23), dans lequel au moins une partie du boîtier (28) présente des ajours (24) et des éléments de maintien (27), qui entrent dans des ajours correspondants au niveau du boîtier (28), sont réalisés au niveau de l'élément d'étanchéité (21), et dans lequel au moins un élément d'information (26) est disposé au niveau de l'élément d'étanchéité (21), qui est réalisé sous la forme d'une partie faisant saillie (26), qui dépasse par un ajour (24) du boîtier (28), dans lequel le boîtier (28) comprend trois parties de boîtier (22) et deux éléments de liaison (23), dans lequel les trois parties de boîtier (22) sont reliées par les deux éléments de liaison (23), et dans lequel deux parties faisant saillie (26) se faisant face à peu près au niveau de l'élément d'étanchéité (21) et faisant saillie radialement, disposées à peu près au centre et deux ajours (24) correspondants à celles-ci sont réalisés au niveau du boîtier (28), **caractérisé en ce que** les parties faisant saillie (26) traversent vers l'extérieur les ajours (24) correspondants à celles-ci, dans lequel une partie faisant saillie (26) traverse un desdits ajours (24) entre deux parties de boîtier (22) du boîtier (28) vers l'extérieur, dans lequel les parties faisant saillie (26) fournissent ainsi une information sur l'élément d'étanchéité (21) disposé dans le boîtier (28) et en particulier sur la réalisation de sa section transversale.

2. Manchon (20) selon la revendication 1, **caractérisé en ce que** l'élément d'étanchéité (21) est réalisé sous la forme d'un joint d'étanchéité d'insertion sous la forme d'une gaine composée d'un matériau flexible.

3. Manchon (20) selon l'une quelconque des revendications 1 ou 2, **caractérisé en ce que** des parties faisant saillie (26) sont réalisées d'un seul tenant avec l'élément d'étanchéité (21).

4. Manchon (20) selon l'une quelconque des revendications précédentes, **caractérisé en ce que** les parties faisant saillie (26) sont réalisées au niveau de l'élément d'étanchéité (21) de manière à présenter une forme de cylindre ou une forme de carré ou une forme de cône ou une forme de barre ou de manière à converger en pointe ou en tant qu'ellipsoïde ou en une forme mixte des formés susmentionnées.

5. Ensemble formant câble ou ensemble formant gaine de câbles avec au moins un manchon (20) selon l'une quelconque des revendications 1 à 4.
